# EUROPÄISCHE PATENTSCHRIFT

(11) **EP 0 521 325 B1**
(45) Veröffentlichungstag und Bekanntmachung des Hinweises auf die Patenterteilung: **25.09.1996**
(21) Anmeldenummer: 92109961.0
(22) Anmeldetag: 13.06.1992
(51) Int. Cl.: F23R 3/02, F02C 7/266, F23R 3/12

(54) **Brennkammer**
Combustion chamber
Chambre de combustion

(30) Priorität: 03.07.1991 CH 1967/91
(43) Veröffentlichungstag der Anmeldung: 07.01.1993
(73) Patentinhaber: ASEA BROWN BOVERI AG, CH-5401 Baden (CH)
(72) Erfinder: Knöpfel, Hans Peter, CH-5627 Besenbüren (CH); Kuhn, Emil, CH-5400 Baden (CH); Pelet, Claude, CH-1027 Lonay (CH); Peter, Hans, CH-8902 Urdorf (CH)

(56) Entgegenhaltungen:
- EP-A- 0 210 462
- EP-A- 0 321 809
- D. B. SPALDING 'SOME FUNDAMENTALS OF COMBUSTION' , BUTTERWORTHS , LONDON Factors Affecting Ignition

## Beschreibung

### Technisches Gebiet

Die vorliegende Erfindung betrifft einen Brenner gemäss Oberbegriff des Anspruchs 1. Sie betrifft auch ein Verfahren zum Betrieb eines solchen Brenners.

### Stand der Technik

Bei jedem Brenner für eine Feuerungsanlage oder Brennkraftmaschine oder Brennkammer einer Gasturbogruppe kann immer wieder festgestellt werden, dass im Bereich der Zündelektroden an sich stets eine zu grosse Luft- oder Gemisch-Geschwindigkeit vorherrscht. Insbesondere bei Vormischbrennern, also bei Brennern, bei welchen die Vormischzone ein integrierender Bestandteil des Brenners selbst ist, wie dies aus EP-A1-0 321 809 hervorgeht, muss sichergestellt werden, dass die Zündung des Brennstoff/Luft-Gemisches an einem Ort geschieht oder vonstatten geht, wo keine zu grosse Strömungsgeschwindigkeit des Mediums vorherrscht; zugleich muss auch dafür gesorgt werden, dass die Fortpflanzung der Flammenfront oder Flammenzungen Richtung Ausgang des Brenners, wo sich eine Rückströmzone einstellt, definiert erfolgt. Auch muss natürlich sichergestellt werden, dass die Zündung darüber hinaus an einem Ort zu geschehen hat, wo auch ein zündungsfähiges stöchiometrisches oder vorzugsweise leicht unterstöchiometrisches Gemisch vorliegt, und wo sich auch die erste Flammenbildung erhalten kann, bis die Flammenfront jenen Stabilisationsort am Ausgang des Brenners erreicht hat. Soweit ersichtlich, insbesondere bei Vormischbrennern der vorgenannten Art, ist eine solche Konfiguration, welche die postulierten Voraussetzungen und Nachteilbehebung bei der Zündung zu erfüllen vermag, noch nicht vorgeschlagen worden.

### Darstellung der Erfindung

Hier will die Erfindung Abhilfe schaffen. Der Erfindung, wie sie in den Ansprüchen gekennzeichnet ist, liegt die Aufgabe zugrunde, eine Zündungsvorrichtung der eingangs genannten Art vorzuschlagen, welche einen definierten Zündungsverhalten und Zündungsablauf gestattet.

Die wesentlichen Vorteile der Erfindung sind darin zu sehen, dass sich die Zündung nach einem bestimmten Ablauf fortpflanzt, dergestalt, dass die Vormischzone gezielt und nicht chaotisch überbrückt wird, d.h. die Flammenfront am Ausgang des Brenners wird ständig mit einer Flammenzunge gespiesen. Weil die Zündung an einem Ort geschieht, wo eine kleine Mediumsgeschwindigkeit vorherrscht, und weil dieser Ort verhältnismässig weit weg von der eigentlichen Brennzone liegt, bleiben die Zündungselektroden kalt, was ihre Verfügbarkeit und Betriebssicherheit stark erhöht.

Ein weiterer Vorteil der Erfindung ist darin zu sehen, dass sich die so inizierte Flamme besser erhalten und fortpflanzen kann, dies im Sinne einer definierten Ausbreitung, wodurch eine gezielte Zündung der verschiedenen Stabilisationszonen des Brenners zu erzielen ist.

Vorteilhafte und zweckmässige Weiterbildungen der erfindungsgemässen Aufgabenlösung sind in den weiteren abhängigen Ansprüchen gekennzeichnet.

Im folgenden wird anhand der Zeichnungen Ausführungsbeispiele der Erfindung näher erläutert. Alle für das unmittelbare Verständnis der Erfindung nicht erforderlichen Elemente sind fortgelassen. In den verschiedenen Figuren sind gleiche Elemente mit den gleichen Bezugszeichen versehen. Die Strömungsrichtung der Medien ist mit Pfeilen angegeben.

### Kurze Beschreibung der Zeichnungen

Es zeigt:
- Fig. 1: einen Brenner mit integrierter Vormischzone in perspektivischer Ansicht,
- Fig. 2: eine schematische Ansicht des Brenners gemäss Fig. 1 und
- Fig. 3, 4, 5: entsprechende Schnitte durch verschiedene von Fig. 1, nämlich III-III (= Fig. 3), IV-IV (= Fig. 4) und V-V (= Fig. 5), wobei diese Schnitte nur eine schematische Darstellung des Brenners wiedergeben.

### Wege zur Ausführung der Erfindung, gewerbliche Anwendbarkeit

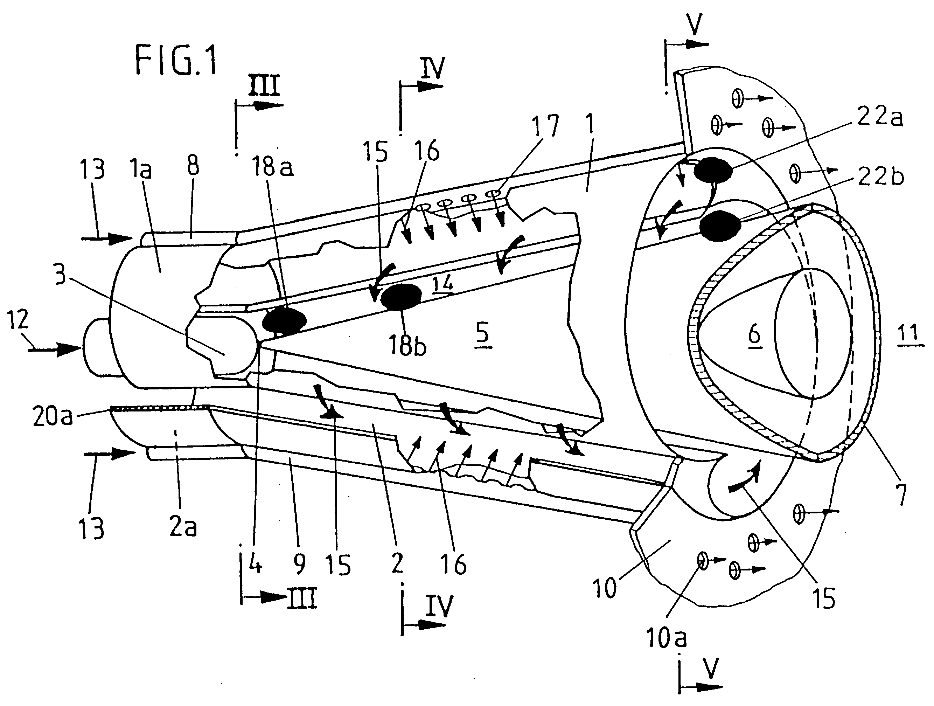

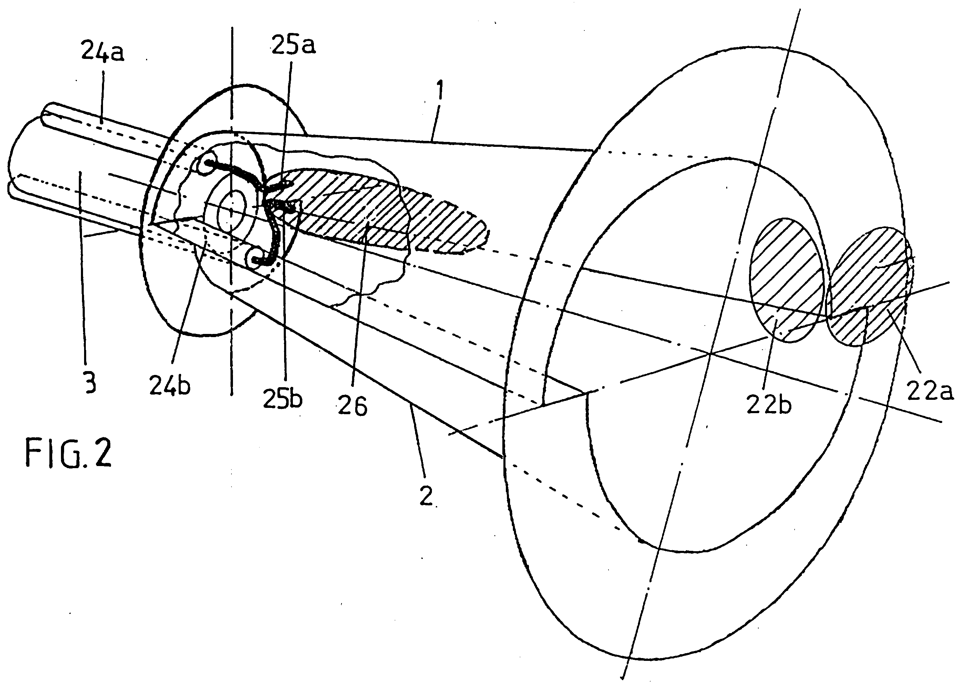

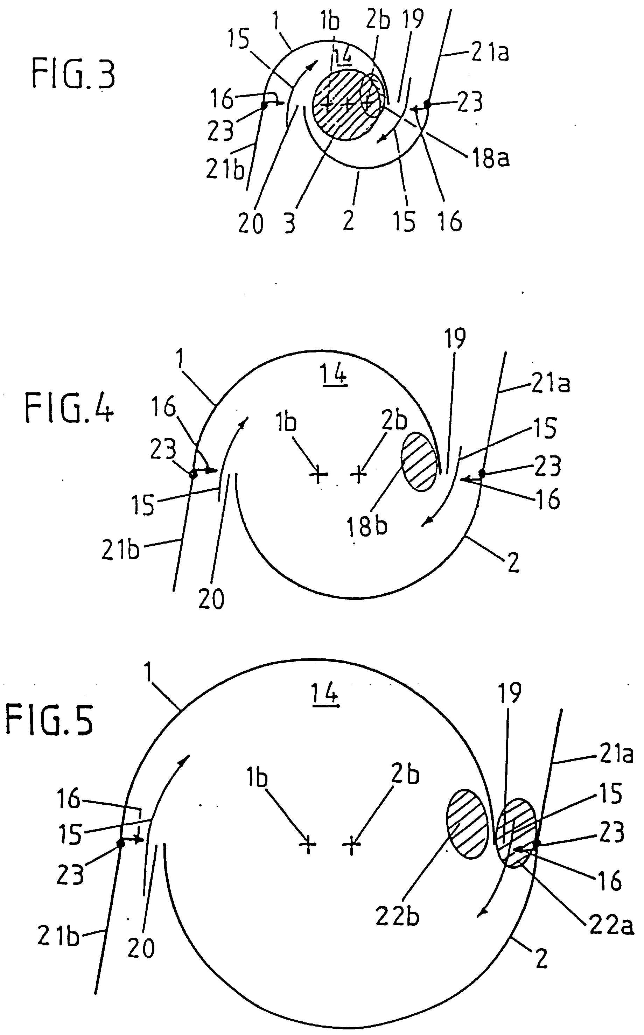

Um den Aufbau des Brenners besser zu verstehen, ist es vorteilhaft, wenn gleichzeitig zu Fig. 1 die einzelnen darin ersichtlichen Schnitte nach den Fig. 3-5 herangezogen werden. Des weiteren, um Fig. 1 bestmöglich übersichtlich zu halten, sind in ihr die nach Fig. 3-5 schematisch gezeigten Leitbleche 21a, 21b nur andeutungsweise aufgenommen worden. Im folgenden wird bei der Beschreibung von Fig. 1 nach Bedarf auf die Figuren 3-5, alllenfalls auf Fig. 2, hingewiesen.

Fig. 1 zeigt in perspektivischer Ansicht einen Brenner, der an sich eine integrierte Vormischzone aufweist. Der Brenner besteht aus zwei halben hohlen Teilkegelkörper 1, 2, die bezüglich ihrer Längssymmetrieachse radial versetzt zueinander aufeinander liegen. Die Versetzung der jeweiligen Längssymmetrieachse 1b, 2b (= Fig. 3-5) zueinander schafft auf beiden Seiten der Teilkegelkörper 1, 2 in entgegengesetzter Einströmungsanordnung jeweils einen tangentialen Lufteintrittschlitz 19, 20 (= Fig. 3-5) frei, durch welche ein Verbrennungsluftstrom 15 in den Innenraum des Brenners, d.h. in den von beiden Teilkegelkörper 1, 2 gebildeten Kegelhohlraum 14 strömt. Die Kegelform der gezeigten Teilkegelkörper 1, 2 weist in Strömungsrichtung einen bestimmten festen Winkel auf. Selbstverständlich können die Teilkegelkörper 1, 2 in Strömungsrichtung eine progressive oder degressive Kegelneigung aufweisen. Die beiden letztgenannten Ausführungsformen sind zeichnerisch nicht erfasst, da sie ohne weiteres nachempfindbar sind. Welche Kegelform schlussendlich zum Einsatz kommt, hängt im wesentlichen von den jeweils vorgegebenen Parametern der Verbrennung ab. Die beiden Teilkegelkörper 1, 2 haben je einen zylindrischen Anfangsteil la, 2a, die, analog zu den Teilkegelkörpern 1, 2, versetzt zueinander verlaufen, so dass die tangentialen Lufteintrittschlitze 19, 20 an sich über den ganzen Brenner durchgehend sind. In diesem zylindrischen Anfangsteil la, 2a ist eine Düse 3 untergebracht, deren Brennstoffeindüsung 4 mit dem engsten Querschnitt des durch die zwei Teilkegelkörper 1, 2 gebildeten kegeligen Hohlraumes 14 zusammenfällt. Die Grösse dieser Düse 3 richtet sich grundsätzlich nach der Art des Brenners, beispielsweise, ob es sich um einen Pilotbrenner oder Hauptbrenner handelt. Selbstverständlich kann der Brenner rein kegelig, also ohne zylindrische Anfangsteile 1a, 2a, ausgebildet sein. Beide Teilkegelkörper 1, 2 weisen je eine mit Oeffnungen 17 vesehene Brennstoffleitung 8, 9 auf, durch welche vorzugsweise ein gasförmiger Brennstoff 13 herangeführt wird. Dieser Brennstoff 13 vermischt sich im Bereich der tangentialen Lufteintrittschlitze 19, 20 mit der in den Kegelhohlraum 14 einströmenden Verbrennungsluft 15. Die Brennstoffleitung 8, 9 sind deshalb in den tangentialen Lufteintrittschlitze 19, 20 so zu plazieren, dass eine optimale Gemischbildung resultiert. Demnach wird der Eindüsungsort des Brennstoffes aus den Brennstoffleitungen 8, 9 zu einem grossen Teil von der jeweiligen Brennstoffart abhängen, so wird die Eindüsung eines flüssigen gegenüber eines gasförmigen Brennstoffes weiter stromauf der Eintrittschlitze 8, 9 vorgenommen. Wird ein gasförmiger Brennstoff 13 über die Brennstoffleitungen 8, 9 eingesetzt, so geschieht die Gemischbildung mit der Verbrennnungsluft 15, wie bereits oben angedeutet, direkt im Bereich der Lufteintrittschlitze 19, 20, am Eintritt in den Kegelhohlraum 14. Die Düse 3 kann für einen flüssigen als auch für einen gasförmigen Brennstoff ausgelegt werden. Bei einer atmosphärischen Feuerungsanlage wird vorzugsweise mit einem flüssigen Brennstoff 12 gefahren, wobei dieser Brennstoff in einem spitzen Winkel in den Kegelhohlraum 14 eingedüst wird, dergestalt, dass sich in der Brenneraustrittsebene ein möglichst homogenes kegeliges Sprühbild einstellt, was nur möglich ist, wenn die Innenwände der Teilkegelkörper 1, 2 durch die Brennstoffeindüsung 4, bei welcher es sich um eine luftunterstützte oder Druck-Zerstäubung handeln kann, nicht benetzt werden. Zu diesem Zweck wird das kegelige Flüssigbrennstoffprofil 5 von den tangential einströmenden Verbrennungsluftstrom 15, und bei Bedarf von einem weiteren in der Figur nicht ersichtlichen axialen Verbrennungsluftstrom, umschlossen. Bei letzteren ist es wichtig, dass die Geschwindigkeit klein sein muss, allenfalls ist diese axiale Verbrennungsluft stromab der Zündungselektroden in den Kegelhohlraum einzuleiten. In axialer Strömungsrichtung wird die Konzentration des flüssigen Brennstoffes 12 fortlaufend durch die eingemischte Verbrennungsluft 15 abgebaut. Im Zusammenhang mit der Eindüsung des flüssigen Brennstoffes 12 wird im Bereich des Wirbelaufplatzens, also im Bereich der Rückströmzone 6, die optimale homogene Brennstoffkonzentration über den Querschnitt erreicht. Die Zündung des Gemisches erfolgt an geeigneten Orten, wobei sich diese Zündung dann bis an die Spitze der Rückströmzone 6 fortpflanzen wird. Erst an dieser Stelle kann eine stabile Flammenfront 7 entstehen. Ein Rückschlag der Flamme ins Innere des Brenners, wie dies bei bekannten Vormischstrecken potentiell immer der Fall sein kann, wogegen dort mit komplizierten Flammenhaltern Abhilfe gesucht wird, ist hier nicht zu befürchten. Ist die Verbrennungsluft vorgewärmt, so stellt sich eine beschleunigte ganzheitliche Verdampfung des flüssigen Brennstoffes 12 ein, bevor der Punkt am Ausgang des Brenners erreicht ist, an dem sich die Flammenfront 7 bildet. Der Grad der Verdampfung ist selbstverständlich von der Grösse des Brenners, von der Tropfengrösse des eingedüsten Brennstoffes sowie von der Temperatur der Verbrennungsluft 15 abhängig. Minimierte Schadstoffemissionswerte treten auf, wenn eine vollständige Verdampfung vor Eintritt in die Verbrennungszone bereitgestellt werden kann. Gleiches gilt auch für den nahstöchiometrischen Betrieb, wenn die Ueberschussluft durch ein rezirkulierendes Abgas ersetzt wird. Bei der Gestaltung der Teilkegelkörper 1, 2 hinsichtlich des Kegelwinkels und der Breite der tangentialen Lufteintrittschlitze 19, 20 sind enge Grenzen einzuhalten, damit sich das gewünschte Strömungsfeld der Luft mit ihrer Rückströmzone 6 im Bereich der Brennermündung zur Flammenstabilisierung einstellt. Allgemein ist zu sagen, dass eine Verkleinerung der Lufteintrittschlitze 19, 20 die Rückströmzone 6 weiter stromaufwärts verschiebt, wodurch dann allerdings das Gemisch früher zur Zündung käme. Immerhin ist hier anzumerken, dass die einmal fixierte Rückströmzone 6 an sich positionsstabil ist, denn die Drallzahl nimmt in Strömungsrichtung im Bereich der Kegelform des Brenners zu. Die Konstruktion des Brenners eignet sich bei Bedarf vorzüglich, bei einer vorgegebenen Baulänge des Brenners, die Grösse der tangentialen Lufteintrittschlitze 19, 20 zu verändern, dies indem Mittel vorgesehen werden, welche ermöglichen, dass die Teilkegelkörper 1, 2 zu- oder auseinander geschoben werden können, wodurch sich der Abstand der beiden Mittelachsen 1b, 2b verkleinert resp. vergrössert, dementsprechend sich auch die Spaltgrösse der tangentialen Lufteintrittschlitze 19, 20 verändert, wie dies wohl am besten aus den Figuren 3-5 hervorgeht. Eine spiralförmige Einschiebung der beiden Teilkegelkörper 1, 2 ineinander sowie deren axiale Verschiebung gegeneinander ist bei bestimmten verbrennungstechnischen Ausrichtungen auch möglich. Somit hat man es in der Hand, die Form und die Grösse der tangentialen Lufteintrittschlitze 19, 20 beliebig zu variieren, womit der Brenner diesbezüglich ohne Veränderung seiner Baulänge innerhalb einer bestimmten betrieblichen Bandbreite individuell angepasst werden kann. Brennraumseitig 11 geht die Ausgangsöffnung des Brenners in eine Frontwand 10 über, in welcher eine Anzahl Bohrungen 10a vorgesehen sind. Die letztgenannten treten bei Bedarf in Funktion, und sorgen dafür, dass Verdünnungsluft oder Kühlluft dem vorderen Teil des Brennraumes 22 zugeführt wird. Darüber hinaus sorgt die Luftzuführung dafür, dass eine zusätzlich Flammenstabilisierung am Ausgang des Brenners stattfindet. Diese Flammenstabilisierungg ist wichtig, denn sonst bestünde die Gefahr, dass die Kompaktheit der Flammenfront 7 durch eine radiale Abflachung verloren ginge. Die Figur 1 zeigt des weiteren durch schwarze Umrandungen auf, wo sich Vorzugsorte für die Zündung befinden. Grundsätzlich ist hierzu zu sagen, dass die Zündung an einem Ort zu geschehen hat, bei welchem gewährleistet ist, dass die sich hier bildende Flamme die Vormischzone entlang des Kegelhohlraumes 14 gezielt, definiert und nicht chotisch überbrückt wird, dergestalt, dass die Flammenfront 7 am Ausgang des Brenners ständig mit einem Flammenlauf gespiesen wird. Dies ist indessen nur möglich, wenn die Zündungsorte dort vorgesehen werden, wo eine kleine Mediumsgeschwindigkeit vorherrscht, worauf die Bedingungen geschaffen sind, dass der Flammenlauf eine kompakte Ausdehnung aufweist. Ist der Zündungsort darüber hinaus weit weg von der eigentlichen Flammenfront 7, so bleiben die dort wirkenden Zündelektroden während des ganzen Betriebes verhältnismässig kalt. Zwei solche Orte sind mit den Positionen 18a und 18b gekennzeichnet, wobei die räumliche Plazierung aus den Figuren 3-5 gut hervorgeht. Die zwei anderen vorzugsweise vorzusehenden Zündungsorte 22a, 22b befinden sich im Bereich des Brennerendes, wobei die hier erfolgende Zündung unmittelbar im Bereich ihres Wirkungsfeldes plaziert ist. Freilich wird hier die Aufwärmung der Elektroden gegenüber den anderen zwei Zündelektroden höher sein. Die räumliche Plazierung der Zündelektrode 22a, 22b geht ebenfalls aus den Figuren 3-5 hervor.

Fig. 2 zeigt eine schematische Ansicht des Brenners, worin insbesondere gut die brennerendseitigen Zündungsorte 22a, 22b ersichtlich sind. Des weiteren geht aus dieser Figur die Plazierung der Zündelektroden 24a, 24b für den Zündungsort 18a hervor. Die Elektrodenenden 25a, 25b fallen mit dem jeweiligen Zündungsort zusammen, wobei die beiden Enden dieser Elektroden 24a, 24b vorzugsweise einen Zwischenabstand von ca. 4 mm aufweisen. Für andere Zündungsorte werden die Zündelektroden selbsverständlich eine andere Konfiguration aufweisen. Ersichtlich ist des weiteren, wie sich die Flammenzunge 26 in kompakter Weise entlang des Lufteintrittschlitzes in Strömungsrichtung entwickelt und abläuft, wobei diese Flammenzunge 26 durch die durch die tangentialen Lufteintrittschlitze 19, 20 einströmende Verbrennungsluft 15 eine leichte Drallbewegung aufgezwungen bekommt.

Aus den Fig. 3-5 geht nunmehr die geometrische Konfiguration der Leitbleche 21a, 21b sowie nochmals die genaue Plazierung der Zündungsorte 18a, 18b, 22a, 22b hervor. Die Leitbleche 21a, 21b haben Strömungseinleitungsfunktion, wobei diese, entsprechend ihrer Länge, das jeweilige Ende der Teilkegelkörper 1, 2 in Anströmungsrichtung gegenüber der Verbrennungsluft 15 verlängern. Die Kanalisierung der Verbrennungsluft 15 in den Kegelhohlraum 14 kann durch Oeffnen bzw. Schliessen der Leitbleche 21a, 21b um einen im Bereich des Eintrittes dieses Kanals in Kegelhohlraum 14 plazierten Drehpunkt 23 optimiert werden, insbesondere ist dies vonnöten, wenn die ursprüngliche Spaltgrösse der tangentialen Lufteintrittschlitze 19, 20 verändert wird. Selbstverständlich können diese dynamischen Vorkehrungen auch als statische Gebilde vorgesehen werden, indem bedarfsmässige Leitbleche einen festen Bestandteil der Teilkegelkörpern 1, 2 bilden. Ebenfalls kann der Brenner auch ohne Leitbleche betrieben werden, oder es können andere Hilfsmittel hierfür vorgesehen werden.

### Bezeichnungsliste

- 1, 2: Teilkegelkörper
- 1a, 2a: Zylindrische Anfangsteile
- 1b, 2b: Mittelachsen
- 3: Düse
- 4: Brennstoffeindüsung
- 5: Flüssigbrennstoffprofil
- 6: Rückströmzone
- 7: Flammenfront
- 8, 9: Brennstoffleitungen
- 10: Kesselwand, Frontwand
- 10a: Bohrungen durch Pos. 10
- 11: Brennraum
- 12: Brennstoff
- 13: Brennstoff
- 14: Kegelhohlraum
- 15: Verbrennungsluft
- 16: Eindüsung des Brennstoffes 13
- 17: Brennstoffdüsen
- 18a, 18b: Zündungsorte
- 19, 20: Tangentiale Lufteintrittschlitze
- 21a, 21b: Leitbleche
- 22a, 22b: Zündungsorte
- 23: Drehpunkte der Leitbleche
- 24a, 24b: Zündelektroden
- 25a, 25b: Elektrodenenden
- 26: Flammenzunge

## Patentansprüche

1. Brenner zum Betrieb einer Brennkraftmaschine, einer Brennkammer einer Gasturbogruppe oder einer Feuerungsanlage, wobei der Brenner im wesentlichen aus mindestens zwei in Strömungsrichtung ineinandergeschachtelten, hohlen, kegelförmigen Teilkörpern (1, 2) besteht, deren Längssymmetrieachsen (1b, 2b) radial versetzt zueinander verlaufen, wodurch strömungsmässig entgegengesetzte tangentiale Lufteintrittsschlitze (19, 20) für einen Verbrennungsluftstrom (15) entstehen, wobei im von den kegelförmigen Teilkörpern (1, 2) gebildeten Kegelhohlraum (14) mindestens eine Düse (3) zur Eindüsung eines Brennstoffes (12) plaziert ist, und wobei die kegeligen Teilkörper (1, 2) mit oder ohne Mitteln (8, 9, 17) zur Einbringung eines weiteren Brennstoffes (13) im Bereich der tangentialen Lufteintrittsschlitze (19, 20) ergänzt sind, dadurch gekennzeichnet, dass Elektrodenenden (25a, 25b) von Zündelektroden (24a, 24b) im Bereich der tangentialen Lufteintrittsschlitze (19, 20) angeordnet sind.

2. Brenner nach Anspruch 1, dadurch gekennzeichnet, dass die Düse (3) eine luftunterstützte Düse ist.

3. Verfahren zum Betrieb eines Brenners nach Anspruch 1, welcher im wesentlichen aus mindestens zwei in Strömungsrichtung ineinandergeschachtelten, hohlen, kegelförmigen Teilkörpern (1, 2) besteht, deren Längssymmetrieachsen (1b, 2b) radial ver setzt zueinander verlaufen, wodurch strömungsmässig entgegengesetzte tangentiale Lufteintrittsschlitze (19, 20) für einen Verbrennungsluftstrom (15) entstehen, wobei im von den kegelförmigen Teilkörpern (1, 2) gebildeten Kegelhohlraum (14) mindestens eine Düse (3) zur Einbringung eines Brennstoffes (12) plaziert ist, und wobei die kegeligen Teilkörper (1, 2) mit oder ohne Mitteln (8, 9, 17) zur Einbringung eines weiteren Brennstoffes (13) im Bereich der tangentialen Lufteintrittsschlitze ergänzt sind, dadurch gekennzeichnet, dass durch Drosselung der Verbrennungsluft (15) eine Reduktion der Strömungsgeschwindigkeit im Bereich der Zündungsorte (18a, 18b, 22a, 22b) erzeugt wird.

## Claims

1. Burner for operating an internal combustion engine, a combustion chamber of a gas turbine group or firing equipment, the burner consisting essentially of at least two hollow conical partial bodies (1,2) nested one in the other in the flow direction, the longitudinal axes of symmetry (1b, 2b) of said partial bodies extending radially offset relative to one another so that tangential air inlet slots (19, 20) with opposite flow directions are produced for a combustion air flow (15), at least one nozzle (3) for introducing a fuel (12) being placed in the hollow conical space (14) formed by the conical partial bodies (1, 2), and the conical partial bodies (1, 2) being supplemented with or without means (8, 9, 17) for introducing a further fuel (13) in the region of the tangential air inlet slots (19, 20), characterized in that electrode ends (25a, 25b) of ignition electrodes (24a, 24b) are arranged in the region of the tangential air inlet slots (19, 20).

2. Burner according to Claim 1, characterized in that the nozzle (3) is an air-blast nozzle.

3. Method for operating a burner according to Claim 1, which burner consists essentially of at least two hollow conical partial bodies (1,2) nested one in the other in the flow direction, the longitudinal axes of symmetry (1b, 2b) of said partial bodies extending radially offset relative to one another so that tangential air inlet slots (19, 20) with opposite flow directions are produced for a combustion air flow (15), at least one nozzle (3) for introducing a fuel (12) being placed in the hollow conical space (14) formed by the conical partial bodies (1, 2), and the -conical partial bodies (1, 2) being supplemented with or without means (8, 9, 17) for introducing a further fuel (13) in the region of the tangential air inlet slots, characterized in that by throttling the combustion air (15) a reduction in the flow velocity is produced in the region of the ignition locations (18a, 18b, 22a, 22b).

## Revendications

1. Brûleur pour faire fonctionner un moteur à combustion interne, une chambre de combustion d'un turbo-groupe à gaz ou une installation de chauffe, dans lequel le brûleur se compose essentiellement d'au moins deux corps partiels coniques creux (1, 2) engagés l'un dans l'autre dans la direction d'écoulement, dont les axes de symétrie longitudinaux (1b, 2b) sont radialement décalés l'un par rapport à l'autre, ce qui entraîne la formation de fentes d'entrée d'air tangentielles (19, 20) opposées l'une à l'autre par rapport à l'écoulement, pour un courant d'air de combustion (15), dans lequel au moins un gicleur (3) est placé dans la chambre conique creuse (14) formée par les corps partiels coniques (1, 2), pour l'injection d'un combustible (12), et dans lequel les corps partiels coniques (1, 2) avec ou sans moyens (8, 9, 17) pour introduire un autre combustible (13) sont complétés dans la région des fentes d'entrée d'air tangentielles (19, 20), caractérisé en ce que des extrémités d'électrodes (25a, 25b) d'électrodes (24a, 24b) sont disposées dans la région des fentes d'entrée d'air tangentielles (19, 20).

2. Brûleur suivant la revendication 1, caractérisé en ce que le gicleur (3) est un gicleur à air.

3. Procédé pour faire fonctionner un brûleur suivant la revendication 1, qui se compose essentiellement d'au moins deux corps partiels coniques creux (1, 2), engagés l'un dans l'autre dans la direction d'écoulement, dont les axes de symétrie longitudinaux (1b, 2b) sont décalés radialement l'un par rapport à l'autre, ce qui entraîne la formation de fentes d'entrée d'air tangentielles (19, 20) opposées l'une à l'autre par rapport à l'écoulement, pour un courant d'air de combustion (15), dans lequel au moins un gicleur (3) est placé dans la chambre conique creuse (14) formée par les corps partiels coniques (1, 2), pour l'injection d'un combustible (12), et dans lequel les corps partiels coniques (1, 2) avec ou sans moyens (8, 9, 17) pour introduire un autre combustible (13) sont complétés dans la région des fentes d'entrée d'air tangentielles (19, 20), caractérisé en ce que, en étranglant l'air de combustion (15), on produit une réduction de la vitesse d'écoulement dans la région des endroits d'allumage (18a, 18b, 22a, 22b).
